(19) **Europäisches Patentamt / European Patent Office / Office européen des brevets**

(11) **EP 2 806 291 A1**

(12) # EUROPEAN PATENT APPLICATION

(43) Date of publication:
26.11.2014 Bulletin 2014/48

(51) Int Cl.:
*G01S 19/40* (2010.01)  *G01S 19/42* (2010.01)
*G01S 19/39* (2010.01)

(21) Application number: 14168123.9

(22) Date of filing: 13.05.2014

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: 24.05.2013 CN 201310199806
09.05.2014 US 201414273639

(71) Applicant: **O2 Micro, Inc.**
**Santa Clara, CA 95054 (US)**

(72) Inventors:
• **Gou, Juan**
**610041 Chengdu (CN)**
• **Zou, Jinghua**
**610041 Chengdu (CN)**
• **Lin, Chih-Lang**
**105 Taipei City (TW)**

(74) Representative: **Lippert, Stachow & Partner Patentanwälte**
**Postfach 30 02 08**
**51412 Bergisch Gladbach (DE)**

(54) **Method and apparatus for evaluating satellite positioning quality**

(57) A method for evaluating satellite positioning quality and a satellite receiver are disclosed. Satellite information is obtained from one or more satellites of the set of satellites. The satellite information includes an observed value of a parameter of each of the one or more satellites. An estimated value of each observed value is determined based on the satellite information. A set of residual values between the estimated values and the observed values is obtained. A positioning quality associated with the set of satellites is determined based on the set of residual values.

FIG. 1

EP 2 806 291 A1

**Description**

RELATED APPLICATIONS

This application claims priority to Chinese Patent Appliance No. 201310199806.3, titled "Method and Satellite Receiver for Evaluating Satellite," filed on May 24, 2013, with the State Intellectual Property Office of the People's Republic of China, all of which is incorporated by reference in its entirety herein.

FIELD OF THE PRESENT DISCLOSURE

The present disclosure relates generally to satellite navigation technology, specifically, the present teaching is directed to satellite receivers and methods for evaluating satellite positioning quality.

BACKGROUND

For a satellite receiver to output positioning data (e.g., coordinate information or velocity information) quickly and precisely, it is necessary to evaluate positioning quality as soon as possible, so as to shorten the Time to First Fix (TTFF) and the fast recovery time of the satellite receiver, and to improve positioning accuracy of the satellite navigation system.

The conventional methods for evaluating positioning quality are based on parameters such as number of available satellites, strength of satellite signals, channel quality, dilution of precision (DOP) or by means of multiple evaluations.

However, due to lack of quantization of parameters such as number of available satellites, strength of satellite signals or channel quality, these parameters are traditionally predetermined based on empirical values. As a result, there are often errors in evaluation, and thus accuracy of coordinate information outputted by the satellite receiver is decreased. In addition, although a method including multiple evaluations is useful when there is large jitter in positioning data, it is time-consuming and not helpful if there is a constant deviation between the positioning result and the actual position of the satellite receiver.

Therefore, there exists a need to provide a method for evaluating positioning quality that can output evaluation result rapidly and accurately.

SUMMARY

Embodiments described herein relate to method for evaluating positioning quality and a satellite receiver.

In an embodiment, a method for evaluating positioning quality is disclosed. Satellite information is obtained from one or more satellites of the set of satellites. The satellite information includes an observed value of a parameter of each of the one or more satellites. An estimated value of each observed value is determined based on the satellite information. A set of residual values between the estimated values and the observed values is obtained. A positioning quality associated with the set of satellites is determined based on the set of residual values.

In another embodiment, a satellite receiver is disclosed. The satellite receiver includes an acquisition module, an estimated value calculating module and a residual value calculating module. The acquisition module is configured for obtaining satellite information from one or more satellites of the set of satellites. The satellite information includes an observed value of a parameter of each of the one or more satellites. The estimated value calculating module is configured for determining an estimated value of each observed value based on the satellite information. The residual value calculating module is configured for obtaining a set of residual values between the estimated values and the observed values and for determining a positioning quality associated with the set of satellites based on the set of residual values.

Additional benefits and novel features will be set forth in part in the description which follows, and in part will become apparent to those skilled in the art upon examination of the following and the accompanying drawings or may be learned by production or operation of the disclosed embodiments. The benefits of the present embodiments may be realized and attained by practice or use of various aspects of the methodologies, instrumentations and combinations set forth in the detailed description set forth below.

BRIEF DESCRIPTION OF THE DRAWINGS

Features and benefits of embodiments of the claimed subject matter will become apparent as the following detailed description proceeds, and upon reference to the drawings, wherein like numerals depict like parts. These exemplary embodiments are described in detail with reference to the drawings. These embodiments are non-limiting exemplary embodiments.

FIG. 1 is a flowchart illustrating a method for evaluating satellite positioning quality, in accordance with an embodiment of the presenting disclosure;

FIG. 2 is a flowchart illustrating a method for evaluating satellite positioning quality, in accordance with another embodiment of the presenting disclosure;

FIG. 3 is a flowchart illustrating a method for evaluating satellite positioning quality, in accordance with yet another embodiment of the presenting disclosure; and

FIG. 4 illustrates an exemplary block diagram of a satellite receiver, in accordance with an embodiment of the present disclosure.

## DETAILED DESCRIPTION

Reference will now be made in detail to the embodiments of the present disclosure. While the present disclosure will be described in conjunction with these embodiments, it will be understood that they are not intended to limit the present disclosure to these embodiments. On the contrary, the present disclosure is intended to cover alternatives, modifications and equivalents, which may be included within the spirit and scope of the present disclosure as defined by the appended claims.

Furthermore, in the following detailed description of the present disclosure, numerous specific details are set forth in order to provide a thorough understanding of the present disclosure. However, it will be recognized by one of ordinary skill in the art that the present disclosure may be practiced without these specific details. In other instances, well known methods, procedures, components, and circuit have not been described in detail as not to unnecessarily obscure aspects of the present disclosure.

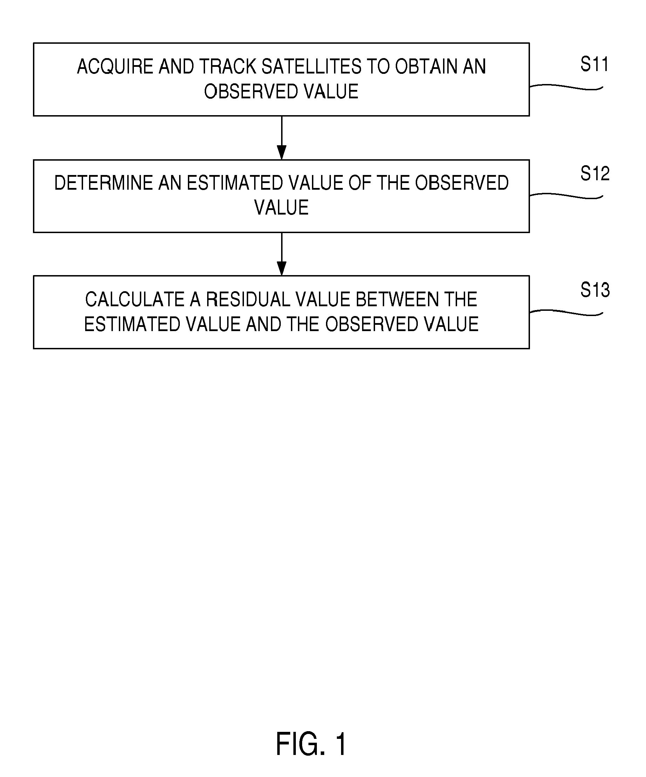

FIG. 1 is a flowchart illustrating a method for evaluating satellite positioning quality, in accordance with an embodiment of the presenting disclosure.

At S11, satellite information is obtained by acquiring and tracking a set of satellites. The satellite information includes an observed value of one or more parameters of at least one of the set of satellites.

At S12, an estimated value of the observed value is determined based on satellite information.

At S13, a residual value between the estimated value and the observed value is calculated and is compared with a predetermined threshold to determine whether the residual value is not less than the predetermined threshold. A positioning quality associated with the set of satellites can be determined based on a result of the comparison.

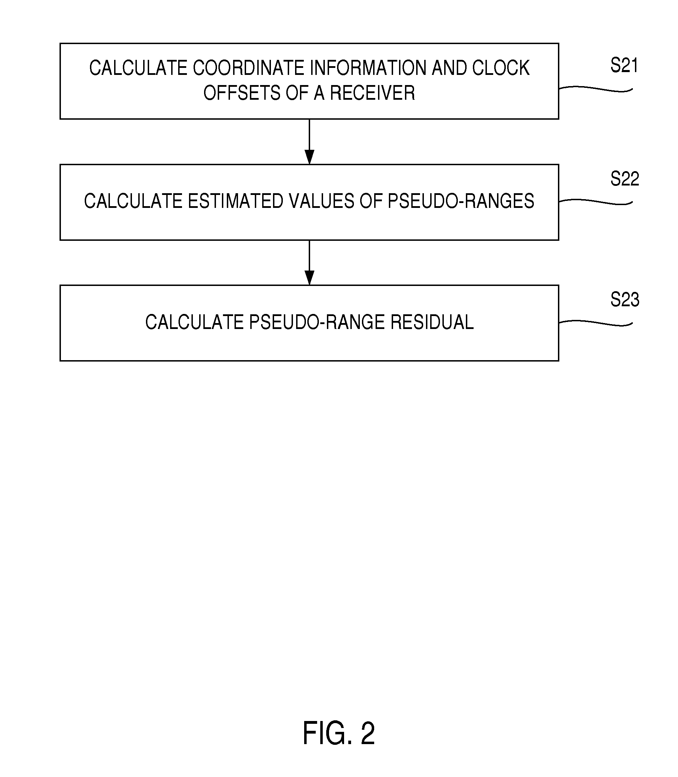

FIG. 2 is a flowchart illustrating a method for evaluating satellite positioning quality, in accordance with another embodiment of the presenting disclosure. In the example of FIG. 2, the one or more parameters as described in FIG. 1 includes a pseudo-range.

At S21, satellite information is obtained by acquiring and tracking satellites. The satellite information includes observed values of pseudo-ranges, coordinates, velocities, and frequency of satellites. Then coordinate information and clock offsets of a satellite receiver are calculated based on satellite information according to equations 1-11 to 1-kp:

$$\rho_{ij} = \sqrt{(x_{ij} - x_u)^2 + (y_{ij} - y_u)^2 + (z_{ij} - z_u)^2} + c \cdot t_{ui} \quad (1\text{-}11)$$

$$\rho_{12} = \sqrt{(x_{12} - x_u)^2 + (y_{12} - y_u)^2 + (z_{12} - z_u)^2} + c \cdot t_{u1} \quad (1\text{-}12)$$

$$....$$

$$\rho_{1m} = \sqrt{(x_{1m} - x_u)^2 + (y_{1m} - y_u)^2 + (z_{1m} - z_u)^2} + c \cdot t_{u1} \quad (1\text{-}1m)$$

$$\rho_{21} = \sqrt{(x_{21} - x_u)^2 + (y_{21} - y_u)^2 + (z_{21} - z_u)^2} + c \cdot t_{u2} \quad (1\text{-}21)$$

$$\rho_{22} = \sqrt{(x_{22} - x_u)^2 + (y_{22} - y_u)^2 + (z_{22} - z_u)^2} + c \cdot t_{u2} \quad (1\text{-}22)$$

$$....$$

$$\rho_{2n} = \sqrt{(x_{2n} - x_u)^2 + (y_{2n} - y_u)^2 + (z_{2n} - z_u)^2} + c \cdot t_{u2} \quad (1\text{-}2n)$$

$$....$$

$$\rho_{k1} = \sqrt{(x_{k1} - x_u)^2 + (y_{k1} - y_u)^2 + (z_{k1} - z_u)^2} + c \cdot t_{uk} \quad (1\text{-}k1)$$

$$\rho_{k2} = \sqrt{(x_{k2} - x_u)^2 + (y_{k2} - y_u)^2 + (z_{k2} - z_u)^2} + c \cdot t_{uk} \quad (1\text{-}k2)$$

$$....$$

$$\rho_{kp} = \sqrt{(x_{kp} - x_u)^2 + (y_{kp} - y_u)^2 + (z_{kp} - z_u)^2} + c \cdot t_{uk} \quad (1\text{-}kp)$$

In above equations, $\rho_{11} \sim \rho_{1m}$ represent observed values of pseudo-ranges between the satellite receiver and each available satellite in a first satellite navigation system, assuming that the number of available satellites in the first satellite navigation system is m. Similarly, $\rho_{21} \sim \rho_{2n}$ represent observed values of pseudo-ranges between the satellite receiver and each available satellite in a second satellite navigation system, assuming that number of available satellites in the second satellite navigation system is n; and $\rho_{k1} \sim \rho_{kp}$ represent observed values of pseudo-ranges between the satellite receiver and each available satellite in a $k_{th}$ satellite navigation system, assuming that number of available satellites in the $k_{th}$ satellite navigation system is p. Pseudo-ranges can be obtained by tracking loops in the satellite receiver. In one embodiment, number k is an integer which is greater than or equal to 1.

In above equations, $(x_{1i}, y_{1i}, z_{1i})$ represents coordinate information of each available satellite in the first satellite navigation system ($1 \leq i \leq m$). The $(x_{2j}, y_{2j}, z_{2j})$ represent coordinate information of each available satellite in the second satellite navigation system ($1 \leq j \leq n$). The $(x_{ko}, y_{ko}, z_{ko})$ represent coordinate information of each available satellite in the $k_{th}$ satellite navigation system ($1 \leq o \leq p$). Coordinate information of each available satellite can be obtained based on orbit parameters and positioning time of corresponding satellite. $C$ represents speed of light.

In above equations, $t_{u1}$ represents clock offset between the satellite receiver and the first satellite navigation system. The $t_{u2}$ represents clock offset between the satellite receiver and the second satellite navigation system. The $t_{uk}$ represents clock offset between the satellite receiver and the $k_{th}$ satellite navigation system. Each Clock offset is unknown.

In above equations, $(x_u, y_u, z_u)$ represents coordinate information of the satellite receiver which is also unknown.

The satellite receiver of the present disclosure may be a single-mode satellite receiver which can only receive satellite signals from one satellite navigation system. Alternatively, the satellite receiver can also be a multi-mode satellite receiver which can receive satellite signals from one or more satellite navigation systems. For a single-mode satellite receiver, at least four satellites are required for calculating coordinate information and clock offset of the satellite receiver. In this example, the coordinate information and clock offset of the satellite receiver are calculated based on satellite information from at least four reliable satellites. The reliable satellites are satellites for which the satellite receiver has better tracking quality. The reliable satellites can be selected based on strength of received signal and tracking index. The required number of satellites for a multi-mode satellite receiver can be derived from the required number of satellites for a single-mode satellite receiver.

Because the observed values of pseudo-ranges may contain various errors, e.g., measurement error of a satellite receiver, clock error of satellites and atmospheric delay error, in this example, the solutions of equation 1-11 to equation 1-kp can be processed by means of least squares measurement or Kalman filtering. Therefore, the calculation results of coordinate information and clock offsets of the satellite receiver may not be exactly accurate.

At S22, estimated values of pseudo-ranges are calculated based on coordinate information and clock offsets of the satellite receiver calculated in step S21 and by using equations 2-11 to 2-kp:

$$\hat{\rho}_{11} = \sqrt{(x_{11} - \hat{x}_u)^2 + (y_{11} - \hat{y}_u)^2 + (z_{11} - \hat{z}_u)^2} + c \cdot \hat{t}_{u1} \quad (2\text{-}11)$$

$$\hat{\rho}_{12} = \sqrt{(x_{12} - \hat{x}_u)^2 + (y_{12} - \hat{y}_u)^2 + (z_{12} - \hat{z}_u)^2} + c \cdot \hat{t}_{u1} \quad (2\text{-}12)$$

....

$$\hat{\rho}_{1m} = \sqrt{(x_{1m} - \hat{x}_u)^2 + (y_{1m} - \hat{y}_u)^2 + (z_{1m} - \hat{z}_u)^2} + c \cdot \hat{t}_{u1} \quad (2\text{-}1m)$$

$$\hat{\rho}_{21} = \sqrt{(x_{21} - \hat{x}_u)^2 + (y_{21} - \hat{y}_u)^2 + (z_{21} - \hat{z}_u)^2} + c \cdot \hat{t}_{u2} \quad (2\text{-}21)$$

$$\hat{\rho}_{22} = \sqrt{(x_{22} - \hat{x}_u)^2 + (y_{22} - \hat{y}_u)^2 + (z_{22} - \hat{z}_u)^2} + c \cdot \hat{t}_{u2} \quad (2\text{-}22)$$

....

$$\hat{\rho}_{2n} = \sqrt{(x_{2n} - \hat{x}_u)^2 + (y_{2n} - \hat{y}_u)^2 + (z_{2n} - \hat{z}_u)^2} + c \cdot \hat{t}_{u2} \quad (2\text{-}2n)$$

....

$$\hat{\rho}_{k1} = \sqrt{(x_{k1} - \hat{x}_u)^2 + (y_{k1} - \hat{y}_u)^2 + (z_{k1} - \hat{z}_u)^2} + c \cdot \hat{t}_{uk} \quad (2\text{-k1})$$

$$\hat{\rho}_{k2} = \sqrt{(x_{k2} - \hat{x}_u)^2 + (y_{k2} - \hat{y}_u)^2 + (z_{k2} - \hat{z}_u)^2} + c \cdot \hat{t}_{uk} \quad (2\text{-k2})$$

....

$$\hat{\rho}_{kp} = \sqrt{(x_{kp} - \hat{x}_u)^2 + (y_{kp} - \hat{y}_u)^2 + (z_{kp} - \hat{z}_u)^2} + c \cdot \hat{t}_{uk} \quad (2\text{-kp})$$

In above equations, $\hat{\rho}_{11} \sim \hat{\rho}_{1m}$ represent estimated values of pseudo-ranges between the satellite receiver and each available satellite in the first satellite navigation system. Similarly, the $\hat{\rho}_{21} \sim \hat{\rho}_{2n}$ represent estimated values of pseudo-ranges between the satellite receiver and each available satellite in the second satellite navigation system; and the $\hat{\rho}_{k1} \sim \hat{\rho}_{kp}$ represent estimated values of pseudo-ranges between the satellite receiver and each available satellite in the $k_{th}$ satellite navigation system.

$(\hat{x}_u, \hat{y}_u, \hat{z}_u)$ represents estimated value of coordinate information of the satellite receiver $(x_u, y_u, z_u)$. The $\hat{t}_{u1} \sim \hat{t}_{uk}$ represent estimated value of clock offsets between the satellite receiver and each available satellite in the $i_{th}$ satellite navigation system respectively.

At S23, pseudo-range residual between the estimated values of pseudo-ranges and the corresponding observed values are calculated. Each of the residual pseudo-range errors is compared with a first predetermined threshold to determine whether the residual pseudo-range error is equal to or greater than the first predetermined threshold according to an equation (3):

$$\Delta\rho_{ij} = \left| \rho_{ij} - \hat{\rho}_{ij} \right| \quad (3)$$

When equation (1-11) to equation (1-kp) and the equation (2-11) to equation (2-kp) are resolved, the effect of the rotation of earth should be considered. A quality of tracking a satellite can be evaluated based on tracking indexes and the strength of received signals from the satellite. If the tracking quality with respect to a satellite is good, the observed value of pseudo-range calculated based on satellite information is relatively accurate. If the calculated residual pseudo-range error is small, it means that the estimated value of pseudo-range is relatively accurate, so as the calculated coordinate information and clock offsets of the satellite receiver. Thus, the positioning quality is high. On the contrary, if calculated residual pseudo-range error is big which means the calculated coordinate information and calculated clock offsets of the satellite receiver are less accurate, the positioning quality is low. For different purposes of the satellite receiver, the requirements of positioning quality are different. After evaluating positioning quality of a satellite navigation system, the positioning result with different quality can be selectively used in different applications. If an error between the residual pseudo-range error and the first predetermined threshold is beyond a predetermined range, the positioning data can be discarded.

Moreover, equation (1-11) to equation (1-kp) can be generally expressed as an equation (1):

$$\rho_{ij} = \sqrt{(x_{ij} - x_u)^2 + (y_{ij} - y_u)^2 + (z_{ij} - z_u)^2} + c \cdot t_{ui} \,, \quad (1)$$

where $\rho_{ij}$ represents an observed value of pseudo-ranges between a satellite receiver and a $j_{th}$ satellite in an $i_{th}$ satellite

navigation system. The $t_{ui}$ represents clock offset between the satellite receiver and the $i_{th}$ satellite navigation system. The $(x_{ij}, y_{ij}, z_{ij})$ represents coordinate information of $j_{th}$ satellite in the $i_{th}$ satellite navigation system. The $(x_u, y_u, z_u)$ represents coordinate information of the satellite receiver.

Equation (2-11) to equation (2-kp) can be generally expressed as equation (2):

$$\hat{\rho}_{ij} = \sqrt{(x_{ij} - \hat{x}_u)^2 + (y_{ij} - \hat{y}_u)^2 + (z_{ij} - \hat{z}_u)^2} + c \cdot \hat{t}_{ui} \ , (2)$$

where $\hat{\rho}_{ij}$ represents an estimated value of pseudo-range between the satellite receiver and the $j_{th}$ satellite in the $i_{th}$ satellite navigation system. The $\hat{t}_{ui}$ represents an estimated value of clock offset between the satellite receiver and the $i_{th}$ satellite navigation system. The $(x_{ij}, y_{ij}, z_{ij})$ represents coordinate information of $j_{th}$ satellite in the $i_{th}$ satellite navigation system. The $(\hat{x}_u, \hat{y}_u, \hat{z}_u)$ represents an estimated value of coordinate information of the satellite receiver ($x_u$, $y_u$, $z_u$).

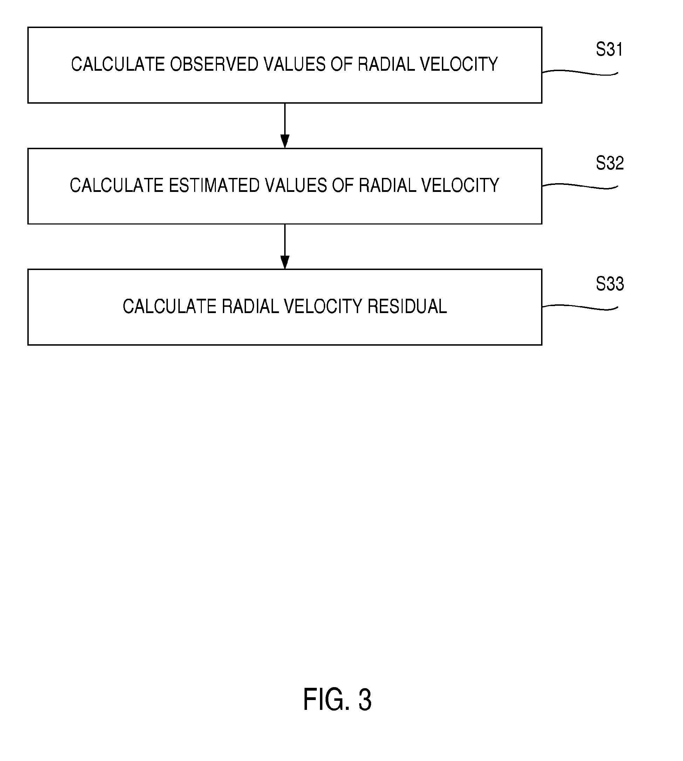

FIG. 3 is a flowchart illustrating a method for evaluating satellite positioning quality, in accordance with yet another embodiment of the presenting disclosure. In the example of FIG. 3, the one or more parameters as described in FIG. 1 include radial velocity of a satellite receiver relative to different satellites.

At S31, satellite information is obtained by tracking satellites. Then observed values of radial velocity of the satellite receiver relative to different satellites are calculated based on satellite information according to an equation (4):

$$d_{ij} = \frac{c(f_{ij} - f_{Tij})}{f_{Tij}} + v_{ij\_x}a_{ij\_x} + v_{ij\_y}a_{ij\_y} + v_{ij\_z}a_{ij\_z}, (4)$$

where the $d_{ij}$ represents an observed value of radial velocity of the satellite receiver relative to a $j_{th}$ satellite in an $i_{th}$ satellite navigation system. The $d_{ij}$ can be obtained according to equation (4). The $f_{ij}$ represents receiving frequency of the satellite receiver relative to the $j_{th}$ satellite in the $i_{th}$ satellite navigation system. The $f_{Tij}$ represents emission frequency of the $j_{th}$ satellite in the $i_{th}$ satellite navigation system. The c represents speed of light. The $(v_{ij\_x}, v_{ij\_y}, v_{ij\_z})$ represents velocity of the $j_{th}$ satellite in the $i_{th}$ satellite navigation system. The $(\dot{x}_u, \dot{y}_u, \dot{z}_u)$ represents velocity of the satellite receiver. The $\dot{t}_u$ represents clock drift of the satellite receiver. The $(a_{ij\_x}, a_{ij\_y}, a_{ij\_z})$ represents direction vector of the $j_{th}$ satellite in the $i_{th}$ satellite navigation system relative to the satellite receiver.

At S32, estimated values of radial velocity of the satellite receiver relative to different satellites are calculated using an equation (5) and an equation (6):

$$\frac{c(f_{ij} - f_{Tij})}{f_{Tij}} + v_{ij\_x}a_{ij\_x} + v_{ij\_y}a_{ij\_y} + v_{ij\_z}a_{ij\_z} = \dot{x}_u a_{ij\_x} + \dot{y}_u a_{ij\_y} + \dot{z}_u a_{ij\_z} - \frac{cf_{ij}\dot{t}_u}{f_{Tij}} \ (5)$$

$$\hat{d}_{ij} = \dot{x}_u a_{ij\_x} + \dot{y}_u a_{ij\_y} + \dot{z}_u a_{ij\_z} - c \cdot \dot{t}_u \ (6)$$

The $\hat{d}_{ij}$ represents an estimated value of radial velocity of the satellite receiver relative to the $j_{th}$ satellite in the $i_{th}$ satellite navigation system. The velocity of the satellite receiver $(\dot{x}_u, \dot{y}_u, \dot{z}_u)$ is solved using the equation (5) and is substituted in the equation (6) for obtaining the estimated value $\hat{d}_{ij}$ of radial velocity of the satellite receiver. Assuming that the ratio $f_{ij}/f_{Tij}$ is approximate to 1, the equation (6) can be derived from the equation (5) and the equation (4).

At S33, radial velocity residual between the estimated value of radial velocity of the satellite receiver and the corresponding observed values are calculated. Each of the radial velocity residual is compared with a second predetermined threshold to determine whether the radial velocity residual is equal to or greater than the second predetermined threshold according to an equation (7):

$$\Delta d_{ij} = \left| d_{ij} - \hat{d}_{ij} \right| \quad (7)$$

In accordance with this embodiment, the method adopts different parameters to evaluate satellite positioning quality in different applications of a satellite receiver. For example, in the application of initializing a filter in the satellite receiver, only the position of the satellite receiver is needed to know. In such case, the method only calculates the pseudo-range residual to evaluate the satellite positioning quality. In another example, in the application of modeling the filter in the satellite receiver, the method calculates both the pseudo-range residual and the radial velocity residual to evaluate the satellite positioning quality.

Therefore, optionally, before the step S21 or step S31, the method of the present disclosure can further include a step of determining whether the pseudo-range residual and/or radial velocity residual are needed based on practical applications. If only the pseudo-range residual is needed, the method goes to step S21. If only the radial velocity residual is needed, the method goes to step S31. If both the pseudo-range residual and the radial velocity residual are needed, the method performs both the step S21 and the step S31.

Furthermore, the method of the present disclosure can further include steps of determining required numbers of satellites for determining the pseudo-range residual or/and the radial velocity residual, and selecting the required numbers of satellites based on tracking quality.

In addition, the predetermined threshold (e.g., the first predetermined threshold or the second predetermined threshold) can be an empirical value. Alternatively, the predetermined threshold may be a range based on the empirical value. The predetermined threshold may vary based on factors such as application field, satellite receiver type, practical environment and so on. Furthermore, the method of the present disclosure may include calculating evaluated values and residual values for only a portion of the available satellites, e.g., those satellites for which the satellite receiver has better tracking quality, and compare each of the residual values with the predetermined threshold to determine positioning quality. Alternatively, the method of the present disclosure may include calculating residual values for all the available satellites and compare an average value of the residual values with the predetermined threshold to evaluate positioning quality.

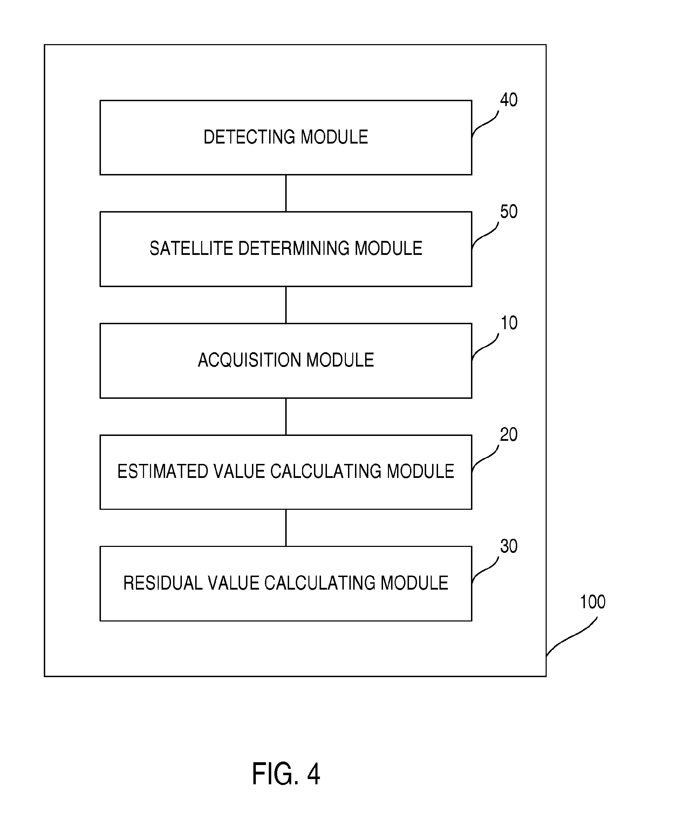

FIG. 4 illustrates an exemplary block diagram of a satellite receiver 100, in accordance with an embodiment of the present disclosure. The satellite receiver 100 includes an acquisition module 10, an estimated value calculating module 20, a residual value calculating module 30, a detecting module 40 and a satellite determining module 50.

The acquisition module 10 is configured for tracking a set of satellites to obtain satellite information. The satellite information includes an observed value of a parameter about at least one of the set of satellites. The estimated value calculating module 20 is coupled with the acquisition module 10 and is configured for determining an estimated value of the observed value based on satellite information. The residual value calculating module 30 is coupled with the estimated value calculating module 20. The residual value calculating module 30 is configured for calculating a residual value between the estimated value and the observed value and for comparing the residual value with a predetermined threshold to determine whether the residual value is equal to or greater than the predetermined threshold. A positioning quality associated with the set of satellites can be determined based on a result of the comparison.

More specifically, in one embodiment, take observed values of pseudo-ranges as examples of the observed value and take estimated values of pseudo-ranges as examples of the estimated value, the acquisition module 10 obtains satellite information and calculates coordinate information and clock offsets of the satellite receiver 100 based on satellite information according to an equation (1):

$$\rho_{ij} = \sqrt{(x_{ij} - x_u)^2 + (y_{ij} - y_u)^2 + (z_{ij} - z_u)^2} + c \cdot t_{ui} \quad (1)$$

where $\rho_{ij}$ represents an observed value of pseudo-ranges between the satellite receiver 100 and a $j_{th}$ satellite in an $i_{th}$ satellite navigation system. The $t_{ui}$ represents a clock offset between the satellite receiver 100 and the $i_{th}$ satellite navigation system. The $(x_{ij}, y_{ij}, z_{ij})$ represents coordinate information of $j_{th}$ satellite in the $i_{th}$ satellite navigation system. The $(x_u, y_u, z_u)$ represents coordinate information of the satellite receiver 100.

The estimated value calculating module 20 calculates estimated values of pseudo-ranges based on coordinate information and clock offsets of the satellite receiver 100 according to an equation (2):

$$\hat{\rho}_{ij} = \sqrt{(x_{ij} - \hat{x}_u)^2 + (y_{ij} - \hat{y}_u)^2 + (z_{ij} - \hat{z}_u)^2} + c \cdot \hat{t}_{ui} \quad , (2)$$

where $\hat{\rho}_{ij}$ represents an estimated value of pseudo-range between the satellite receiver 100 and the $j_{th}$ satellite in the $i_{th}$ satellite navigation system. The $\hat{t}_{ui}$ represents an estimated value of clock offset between the satellite receiver 100 and the $i_{th}$ satellite navigation system. The $(x_{ij}, y_{ij}, z_{ij})$ represents coordinate information of $j_{th}$ satellite in the $i_{th}$ satellite navigation system. The $(\hat{x}_u, \hat{y}_u, \hat{z}_u)$ represents an estimated value of coordinate information of the satellite receiver 100 $(x_u, y_u, z_u)$.

The residual value calculating module 30 calculates pseudo-range residuals between the estimated values of pseudo-ranges and the corresponding observed values according to an equation (3):

$$\Delta \rho_{ij} = \left| \rho_{ij} - \hat{\rho}_{ij} \right| \quad (3)$$

Then the residual value calculating module 30 compares each of the pseudo-range residuals with a first predetermined threshold to determine whether each residual value is equal to or greater than the first predetermined threshold.

In another embodiment, take observed values of radial velocity of the satellite receiver 100 relative to different satellites as examples of the observed values, and take estimated values of radial velocity of the satellite receiver 100 relative to different satellites as examples of the estimated values, the acquisition module 10 acquires and tracks satellites to obtain satellite information. Then the acquisition module 10 calculates observed values of radial velocity of the satellite receiver 100 relative to different satellites based on satellite information according to an equation (4):

$$d_{ij} = \frac{c(f_{ij} - f_{Tij})}{f_{Tij}} + v_{ij\_x}a_{ij\_x} + v_{ij\_y}a_{ij\_y} + v_{ij\_z}a_{ij\_z} \quad , (4)$$

where the $d_{ij}$ represents an observed value of radial velocity of the satellite receiver 100 relative to a $j_{th}$ satellite in an $i_{th}$ satellite navigation system. The $d_{ij}$ can be obtained according to equation (4). The $f_{ij}$ represents receiving frequency of the satellite receiver 100 relative to the $j_{th}$ satellite in the $i_{th}$ satellite navigation system. The $f_{Tij}$ represents emission frequency of the $j_{th}$ satellite in the $i_{th}$ satellite navigation system. The c represents speed of light. The $(v_{ij\_x}, v_{ij\_y}, v_{ij\_z})$ represents velocity of the $j_{th}$ satellite in the $i_{th}$ satellite navigation system. The $(\dot{x}_u, \dot{y}_u, \dot{z}_u)$ represents velocity of the satellite receiver 100. The $\dot{t}_u$ represents clock drift of the satellite receiver 100. The $(a_{ij\_x}, a_{ij\_y}, a_{ij\_z})$ represents direction vector of the $j_{th}$ satellite in the $i_{th}$ satellite navigation system relative to the satellite receiver 100.

The estimated value calculating module 20 calculates estimated values of radial velocity of the satellite receiver 100 according to the equation (5) and the equation (6):

$$\frac{c(f_{ij} - f_{Tij})}{f_{Tij}} + v_{ij\_x}a_{ij\_x} + v_{ij\_y}a_{ij\_y} + v_{ij\_z}a_{ij\_z} = \dot{x}_u a_{ij\_x} + \dot{y}_u a_{ij\_y} + \dot{z}_u a_{ij\_z} - \frac{cf_{ij}\dot{t}_u}{f_{Tij}} \quad (5)$$

$$\overset{\wedge}{\dot{d}}_{ij} = \dot{x}_u \, a_{ij\_x} + \dot{y}_u \, a_{ij\_y} + \dot{z}_u \, a_{ij\_z} - c \cdot \dot{t}_u \quad (6)$$

The residual value calculating module 30 calculates radial velocity residuals $\Delta d_{ij}$ between the estimated values of radial velocity of the satellite receiver 100 and the corresponding observed values according to an equation (7):

$$\Delta d_{ij} = \left| d_{ij} - \overset{\wedge}{d}_{ij} \right| \quad (7)$$

Then the residual value calculating module 30 compares each of the radial velocity residuals with a second predetermined threshold to determine whether each radial velocity residual is equal to or greater than the second predetermined threshold.

In addition, the satellite receiver 100 further includes a detecting module 40 and a satellite determining module 50. The satellite determining module 50 is coupled with the detecting module 40.

The detecting module 40 is configured for determining whether pseudo-range residual or radiate velocity residual is needed in a practical application. Based on the determination from the detecting module 40, the satellite determining module 50 is configured for determining required numbers of satellites for determining the pseudo-range residual and/or the radial velocity residual and for selecting the required numbers of satellites for which the satellite receiver 100 has better tracking quality. The acquisition module 10 further tracks the selected satellites to obtain satellite information.

Moreover, the estimated value calculating module 20 may calculate estimated values for selected satellites for which the satellite receiver has better tracking quality. Alternatively, the estimated value calculating module 20 may calculate estimated values for all the available satellites. If the estimated value calculating module 20 calculates estimated values for selected satellites only, the residual value calculating module 30 calculates residual values for the selected satellites, and compares each of the residual values with a predetermined threshold to check whether any of the residual values is equal to or greater than the predetermined threshold. If the estimated value calculating module 20 calculates estimated values for all the available satellites, the residual value calculating module 30 calculates residual values for each satellite, and compares an average value of all of the residual values with the predetermined threshold to check whether the average value is equal to or greater than the predetermined threshold.

The embodiments of the present disclosure provide method for evaluating positioning quality and a satellite receiver that employs the method. By calculating estimated values and observed values of pseudo-range and radial velocity of a satellite receiver, calculating residual values between observed values and correspondingly estimated values, and comparing each of residual values with a predetermined threshold, the method of present teaching can evaluate positioning quality quickly and precisely.

In addition, the method for evaluating positioning quality and the satellite receiver of the present disclosure can be applied in the following situations.

1. For using a satellite receiver for positioning at a first time, the method of the present disclosure can be utilized to shorten the TTFF and improve positioning precision.
2. For recovering signals from a signal blocked place, such as a tunnel portal, the method of the present disclosure can be utilized to shorten the recovery time and improve positioning precision.
3. For initializing a filter, the method of the present disclosure can be utilized to initialize the filter quickly after evaluation the positioning quality.
4. For evaluating the quality of positioning process, the method of the present disclosure can be utilized to determine positioning quality quickly. If the positioning result becomes less accurate, e.g., when signal strength becomes weak or tracking quality drops, adjustments to the filter can be performed timely.

While the foregoing description and drawings represent embodiments of the present disclosure, it will be understood that various additions, modifications and substitutions may be made therein without departing from the spirit and scope of the principles of the present disclosure as defined in the accompanying claims. One skilled in the art will appreciate that the disclosure may be used with many modifications of form, structure, arrangement, proportions, materials, elements, and components and otherwise, used in the practice of the disclosure, which are particularly adapted to specific environments and operative requirements without departing from the principles of the present disclosure. The presently disclosed embodiments are therefore to be considered in all respects as illustrative and not restrictive, the scope of the disclosure being indicated by the appended claims and their legal equivalents, and not limited to the foregoing description.

## Claims

1. A method for evaluating satellite positioning quality associated with a set of satellites, comprising steps of:

    obtaining, from one or more satellites of the set of satellites, satellite information including an observed value of a parameter of each of the one or more satellites;
    determining an estimated value of each observed value based on the satellite information;
    obtaining a set of residual values between the estimated values and the observed values; and
    determining a positioning quality associated with the set of satellites based on the set of residual values.

2. The method of claim 1, wherein the parameter comprises pseudo-range, wherein obtaining satellite information comprises:

    acquiring the satellite information; and
    calculating coordinate information and clock offsets of a satellite receiver based on the satellite information according to:

$$\rho_{ij} = \sqrt{(x_{ij} - x_u)^2 + (y_{ij} - y_u)^2 + (z_{ij} - z_u)^2} + c \cdot t_{ui} \text{ - Equation (1),}$$

    wherein $\rho_{ij}$ represents an observed value of pseudo-range between a satellite receiver and a $j^{th}$ satellite in an $i^{th}$ satellite navigation system, $t_{ui}$ represents the clock offset between the satellite receiver and the $i^{th}$ satellite navigation system, $(x_{ij}, y_{ij}, z_{ij})$ represents coordinate information of $j^{th}$ satellite in the $i^{th}$ satellite navigation system, and $(x_u, y_u, z_u)$ represents coordinate information of the satellite receiver.

3. The method of claim 1 or 2, wherein determining the estimated value of the observed value based on the satellite information comprises:

    calculating the estimated value of pseudo-range based on the coordinate information and the clock offset of the satellite receiver according to:

$$\hat{\rho}_{ij} = \sqrt{(x_{ij} - \hat{x}_u)^2 + (y_{ij} - \hat{y}_u)^2 + (z_{ij} - \hat{z}_u)^2} + c \cdot \hat{t}_{ui} \text{ - Equation (2),}$$

    wherein $\hat{\rho}_{ij}$ represents the estimated value of pseudo-range between the satellite receiver and the $j^{th}$ satellite in the $i^{th}$ satellite navigation system, $\hat{t}_{ui}$ represents an estimated value of clock offset between the satellite receiver and the $i^{th}$ satellite navigation system, $(x_{ij}, y_{ij}, z_{ij})$ represents coordinate information of the $j^{th}$ satellite in the $i^{th}$ satellite navigation system, and $(\hat{x}_u, \hat{y}_u, \hat{z}_u)$ represents an estimated value of the coordinate information of the satellite receiver $(x_u, y_u, z_u)$.

4. The method of claim 3, wherein
    obtaining a set of residual values comprises
    calculating pseudo-range residual between the estimated value of pseudo-ranges and the observed value of pseudo-ranges according to:

$$\Delta\rho_{ij} = \left| \rho_{ij} - \overset{\wedge}{\rho}_{ij} \right|$$ - Equation (3);

and

determining a positioning quality comprises determining whether the pseudo-range residual is equal to or greater than a first predetermined threshold.

5. The method of one of claims 1 to 4, wherein the parameter comprises radial velocity of the satellite receiver; and wherein obtaining satellite information comprises:

acquiring the satellite information; and
calculating the observed value of velocity of the satellite receiver based on the satellite information according to:

$$d_{ij} = \frac{c(f_{ij} - f_{Tij})}{f_{Tij}} + v_{ij\_x} a_{ij\_x} + v_{ij\_y} a_{ij\_y} + v_{ij\_z} a_{ij\_z}$$ - Equation (4),

wherein $d_{ij}$ represents the observed value of radial velocity of the satellite receiver relative to a $j^{th}$ satellite in an $i^{th}$ satellite navigation system, $d_{ij}$ being known, $f_{ij}$ represents receiving frequency of the satellite receiver relative to the $j^{th}$ satellite in the $i^{th}$ satellite navigation system, $f_{Tij}$ represents emission frequency of the $j^{th}$ satellite in the $i^{th}$ satellite navigation system, C represents speed of light, ($v_{ij\_x}$, $v_{ij\_y}$, $v_{ij\_z}$) represents velocity of the $j^{th}$ satellite in the $i^{th}$ satellite navigation system, ($\dot{x}_u$, $\dot{y}_u$, $\dot{z}_u$) represents velocity of the satellite receiver, $\dot{t}_u$ represents clock drift of the satellite receiver, and ($a_{ij\_x}$, $a_{ij\_y}$, $a_{ij\_z}$) represents direction vector of the $j^{th}$ satellite in the $i^{th}$ satellite navigation system relative to the satellite receiver.

6. The method of claim 5, wherein determining estimated values of corresponding observed values based on the satellite information comprises:

calculating the estimated values of radial velocity of the satellite receiver according to:

$$\frac{c(f_{ij} - f_{Tij})}{f_{Tij}} + v_{ij\_x} a_{ij\_x} + v_{ij\_y} a_{ij\_y} + v_{ij\_z} a_{ij\_z} = \dot{x}_u a_{ij\_x} + \dot{y}_u a_{ij\_y} + \dot{z}_u a_{ij\_z} - \frac{c f_{ij} \dot{t}_u}{f_{Tij}}$$ - Equation (5),

and

$$\overset{\wedge}{d}_{ij} = \dot{x}_u a_{ij\_x} + \dot{y}_u a_{ij\_y} + \dot{z}_u a_{ij\_z} - c \cdot \dot{t}_u$$ - Equation (6),

wherein $\overset{\wedge}{d}_{ij}$ represents the estimated value of radial velocity of the satellite receiver relative to the $j^{th}$ satellite in the $i^{th}$ satellite navigation system.

7. The method of claim 6, wherein
obtaining a set of residual values comprises
calculating radial velocity residual between the estimated value of radial velocity of the satellite receiver and the observed value according to:

$$\Delta d_{ij} = \left| d_{ij} - \hat{d}_{ij} \right|$$ - Equation (7);

and
determining a positioning quality comprises determining whether the radial velocity residual is equal to or greater than a second predetermined.

8. The method of one of claims 1 to 7, wherein the method further comprises:

   determining the parameter for which the residual needs to be calculated;
   determining required number of satellites for determining the residual of the parameter; and
   selecting the required number of satellites from the satellites for which the satellite receiver has a good tracking quality.

9. The method of claim 8, wherein determining an estimated value of the observed values based on the satellite information further comprises:

   calculating estimated values for the selected satellites,
   wherein determining whether a residual value between the estimated value and the observed value is equal to or greater than a predetermined threshold further comprises:

   calculating the residual values for the selected satellites; and
   comparing each of the residual values with the predetermined threshold to check whether any of the residual values is equal to or greater than the predetermined threshold.

10. The method of claim 8, wherein determining an estimated value of the observed values based on the satellite information further comprises:

    calculating the estimated value for each available satellite,
    wherein obtaining a set of residual values comprises:

    calculating the residual value for each available satellite; and
    determining a positioning quality comprises comparing an average value of the residual values with the predetermined threshold to check whether the average value is greater than the predetermined threshold.

11. A satellite receiver for evaluating a positioning quality associated with a set of satellites comprising:

    an acquisition module configured for obtaining, from one or more satellites of the set of satellites, satellite information including an observed value of a parameter of each of the one or more satellites;
    an estimated value calculating module configured for determining an estimated value of each observed value based on the satellite information; and
    a residual value calculating module configured for obtaining a set of residual values between the estimated values and the observed values and for determining a positioning quality associated with the set of satellites based on the set of residual values.

12. The satellite receiver of claim 11, wherein the parameter comprises pseudo-range, wherein the acquisition module is further configured for calculating coordinate information and clock offset of a satellite receiver based on the satellite information according to:

$$\rho_{ij} = \sqrt{(x_{ij} - x_u)^2 + (y_{ij} - y_u)^2 + (z_{ij} - z_u)^2} + c \cdot t_{ui}$$ _ Equation (1),

wherein $\rho_{ij}$ represents an observed value of pseudo-range between the satellite receiver and a j$^{th}$ satellite in an i$^{th}$ satellite navigation system, and wherein $t_{ui}$ represents the clock offset between the satellite receiver and the i$^{th}$ satellite navigation system, ($x_{ij}$, $y_{ij}$, $z_{ij}$) represents coordinate information of j$^{th}$ satellite in the i$^{th}$ satellite navigation system, and ($x_u$, $y_u$, $z_u$) represents coordinate information of the satellite receiver.

13. The satellite receiver of claim 12, wherein the estimated value calculating module is configured for calculating an estimated value of pseudo-range based on the coordinate information and the clock offset of the satellite receiver according to:

$$\hat{\rho}_{ij} = \sqrt{(x_{ij} - \hat{x}_u)^2 + (y_{ij} - \hat{y}_u)^2 + (z_{ij} - \hat{z}_u)^2} + c \cdot \hat{t}_{ui}$$ - Equation (2),

wherein $\hat{\rho}_{ij}$ represents the estimated value of pseudo-range between the satellite receiver and the j$^{th}$ satellite in the i$^{th}$ satellite navigation system, $\hat{t}_{ui}$ represents estimated value of clock offset between the satellite receiver and the i$^{th}$ Satellite navigation system, ($x_{ij}$, $y_{ij}$, $z_{ij}$) represents coordinate information of the j$^{th}$ satellite in the i$^{th}$ satellite navigation system, and ($\hat{x}_u$, $\hat{y}_u$, $\hat{z}_u$) represents estimated value of the coordinate information of the satellite receiver ($x_u$, $y_u$, $z_u$).

14. The satellite receiver of claim 13, wherein the residual value calculating module is configured for calculating pseudo-range residual between the estimated value of pseudo-range and the observed value of pseudo-range according to: $\Delta\rho_{ij} |\rho_{ij} - \hat{\rho}_{ij}|$ - Equation (3); and for determining whether the pseudo-range residual is equal to or greater than a first predetermined threshold.

15. The satellite receiver of one of claims 11 to 14, wherein the parameter comprises radial velocity of the satellite receiver; and wherein the acquisition module is configured for obtaining satellite information, and for calculating the observed value of velocity of the satellite receiver based on the satellite information according:

$$d_{ij} = \frac{c(f_{ij} - f_{Tij})}{f_{Tij}} + v_{ij\_x}a_{ij\_x} + v_{ij\_y}a_{ij\_y} + v_{ij\_z}a_{ij\_z}$$ - Equation (4)

wherein $d_{ij}$ represents the observed value of radial velocity of the satellite receiver relative to a j$^{th}$ satellite in an i$^{th}$ satellite navigation system, $d_{ij}$ being known, $f_{ij}$ represents receiving frequency of the satellite receiver relative to the j$^{th}$ satellite in the i$^{th}$ satellite navigation system, $f_{Tij}$ represents emission frequency of the j$^{th}$ satellite in the i$^{th}$ satellite navigation system, $C$ represents speed of light, ($v_{ij\_x}$, $v_{ij\_y}$, $v_{ij\_z}$) represents velocity of the j$^{th}$ satellite in the i$^{th}$ satellite navigation system, ($\dot{x}_u$, $\dot{y}_u$, $\dot{z}_u$) represents velocity of the satellite receiver, $\dot{t}_u$ represents clock drift of the satellite receiver, and ($a_{ij\_x}$, $a_{ij\_y}$, $a_{ij\_z}$) represents direction vector of the j$^{th}$ satellite in the i$^{th}$ satellite navigation system relative to the satellite receiver.

16. The satellite receiver of claim 15, wherein the estimated value calculating module is configured for calculating estimated value of radial velocity of the satellite receiver according to:

$$\frac{c(f_{ij} - f_{Tij})}{f_{Tij}} + v_{ij\_x}a_{ij\_x} + v_{ij\_y}a_{ij\_y} + v_{ij\_z}a_{ij\_z} = \dot{x}_u a_{ij\_x} + \dot{y}_u a_{ij\_y} + \dot{z}_u a_{ij\_z} - \frac{cf_{ij}\dot{t}_u}{f_{Tij}}$$ - Equation (5)

$$\hat{d}_{ij} = \dot{x}_u \, a_{ij\_x} + \dot{y}_u \, a_{ij\_y} + \dot{z}_u \, a_{ij\_z} - c \cdot \dot{t}_u$$ - Equation (6)

wherein $\hat{d}_{ij}$ represents the estimated value of radial velocity of the satellite receiver relative to the j[th] satellite in the i[th] satellite navigation system.

17. The satellite receiver of claim 16, wherein the residual value determining module is configured for calculating an radial velocity residual between the estimated value of radial velocity of the satellite receiver and the observed value of radial velocity of the satellite receiver according to: $\Delta d_{ij} = |d_{ij} - \hat{d}_{ij}|$ -Equation (7), and for determining whether the radial velocity residual is equal to or greater than a second predetermined threshold.

18. The satellite receiver of one of claims 11 to 17, wherein the satellite receiver further comprises
a detecting module configured for determining the parameter for which the residual needs to be calculated; and
a satellite determining module configured for determining required number of satellites for determining the residual of the parameter, and for selecting the required number of satellites from the satellites for which the satellite receiver has a good tracking quality.

19. The satellite receiver of claim 18, wherein the estimated value calculating module is configured for calculating estimated values for the selected satellites, and wherein the residual value calculating module is configured for calculating residual values for the selected satellites, and for comparing each of the residual values with the predetermined threshold to check whether any of the residual values is equal to or greater than the predetermined threshold.

20. The satellite receiver of claim 18, wherein the estimated value calculating module is configured for calculating the estimated value for each available satellite, and wherein the residual value calculating module is configured for calculating the residual value for each available satellite and for comparing an average value of all of the residual values with the predetermined threshold to check whether the average value is equal to or greater than the predetermined threshold.

ACQUIRE AND TRACK SATELLITES TO OBTAIN AN OBSERVED VALUE — S11

DETERMINE AN ESTIMATED VALUE OF THE OBSERVED VALUE — S12

CALCULATE A RESIDUAL VALUE BETWEEN THE ESTIMATED VALUE AND THE OBSERVED VALUE — S13

FIG. 1

CALCULATE COORDINATE INFORMATION AND CLOCK
OFFSETS OF A RECEIVER — S21

CALCULATE ESTIMATED VALUES OF PSEUDO-RANGES — S22

CALCULATE PSEUDO-RANGE RESIDUAL — S23

FIG. 2

| CALCULATE OBSERVED VALUES OF RADIAL VELOCITY | S31 |

| CALCULATE ESTIMATED VALUES OF RADIAL VELOCITY | S32 |

| CALCULATE RADIAL VELOCITY RESIDUAL | S33 |

FIG. 3

DETECTING MODULE — 40

SATELLITE DETERMINING MODULE — 50

ACQUISITION MODULE — 10

ESTIMATED VALUE CALCULATING MODULE — 20

RESIDUAL VALUE CALCULATING MODULE — 30

100

FIG. 4

## EUROPEAN SEARCH REPORT

Application Number

EP 14 16 8123

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 436 632 A (SHEYNBLAT LEN [US]) 25 July 1995 (1995-07-25) * column 4, line 49 - column 8, line 16; figures 3A,3B,4 * * column 12, line 19 - column 13, line 46 * ----- | 1-20 | INV. G01S19/40 G01S19/42 G01S19/39 |
| X | US 7 095 370 B1 (VAN DIGGELEN FRANK [US] ET AL) 22 August 2006 (2006-08-22) * column 5, line 41 - column 7, line 29; figure 3 * ----- | 1-4, 11-14 | |
| X | US 2009/174598 A1 (VAN DIGGELEN FRANK [US]) 9 July 2009 (2009-07-09) * paragraph [0042] - paragraph [0043]; figure 4 * ----- | 1,5-11, 15-20 | |
| X | US 2007/139263 A1 (XIE GANG [US] ET AL) 21 June 2007 (2007-06-21) * paragraph [0027] - paragraph [0039]; figure 4 * ----- | 1-4, 11-14 | |
| X | US 2009/254275 A1 (XIE GANG [US] ET AL) 8 October 2009 (2009-10-08) * paragraph [0032] - paragraph [0052]; figures 5,6 * ----- | 1-4, 11-14 | TECHNICAL FIELDS SEARCHED (IPC) G01S |

The present search report has been drawn up for all claims

| Place of search | Date of completion of the search | Examiner |
|---|---|---|
| Munich | 13 October 2014 | Fanjul Caudevilla, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**

EP 14 16 8123

This annex lists the patent family members relating to the patent documents cited in the above-mentioned European search report.
The members are as contained in the European Patent Office EDP file on
The European Patent Office is in no way liable for these particulars which are merely given for the purpose of information.

13-10-2014

| Patent document cited in search report | | Publication date | Patent family member(s) | | Publication date |
|---|---|---|---|---|---|
| US 5436632 | A | 25-07-1995 | US | 5436632 A | 25-07-1995 |
| | | | US | 5831576 A | 03-11-1998 |
| US 7095370 | B1 | 22-08-2006 | US | 7095370 B1 | 22-08-2006 |
| | | | US | 2007096978 A1 | 03-05-2007 |
| | | | US | 2010019960 A1 | 28-01-2010 |
| US 2009174598 | A1 | 09-07-2009 | CN | 101185008 A | 21-05-2008 |
| | | | EP | 1891458 A2 | 27-02-2008 |
| | | | HK | 1121808 A1 | 02-09-2011 |
| | | | KR | 20080020653 A | 05-03-2008 |
| | | | US | 2006273954 A1 | 07-12-2006 |
| | | | US | 2009174598 A1 | 09-07-2009 |
| | | | US | 2011199258 A1 | 18-08-2011 |
| | | | WO | 2006130515 A2 | 07-12-2006 |
| US 2007139263 | A1 | 21-06-2007 | NONE | | |
| US 2009254275 | A1 | 08-10-2009 | NONE | | |

For more details about this annex : see Official Journal of the European Patent Office, No. 12/82

**EP 2 806 291 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201310199806